# DEMANDE DE BREVET EUROPEEN

(11) **EP 4 696 671 A1**
(43) Date de publication de la demande: **18.02.2026**
(21) Numéro de dépôt: 25191317.4
(22) Date de dépôt: 23.07.2025
(51) Int. Cl.: C04B 41/50, C04B 33/34, C04B 41/00, C04B 41/86, C04B 111/82

(54) **ÉMAIL DE COULEUR ET SON PROCÉDÉ DE FABRICATION**

(30) Priorité: 16.08.2024 EP 24194995
(71) Demandeur: Comadur S.A., 2400 Le Locle (CH)
(72) Inventeur: LE BOUDOUIL, Damien, 25800 Valdahon (FR)
(74) Mandataire: ICB SA

(57) **Abrégé**

L'invention concerne un émail de couleur, comprenant de la fritte d'émail blanc à base de silice, d'alumine et d'oxyde de cérium et des additifs suivants:
- du sulfate de cuivre anhydre ayant une teneur en masse comprise entre 7% et 15% ;
- du carbonate de potassium ayant une teneur en masse comprise entre 7% et 15% ;
- de l'oxyde de zinc ayant une teneur en masse comprise entre 5% et 15% ; et
- de l'oxyde de vanadium ayant une teneur en masse comprise entre 2% et 7%.

## Description

### DOMAINE TECHNIQUE

La présente invention se rapporte à un émail de couleur bleu turquoise. L'invention concerne également un procédé de fabrication d'un tel émail bleu turquoise.

### ART ANTERIEUR

Il est déjà connu d'incorporer des agents colorants ou pigments tels que le chrome, le cuivre, le cobalt ou encore le fer dans les émaux pour obtenir des émaux colorés.

L'utilisation de ce type d'agents colorants présente de nombreux inconvénients dès lors que l'on souhaite incorporer ce type d'agents colorants.

En effet, ces agents colorants manquent de stabilité à température élevée et présentent leurs caractéristiques colorantes selon la température à laquelle ils sont chauffés. Cela limite et complique grandement l'utilisation de ce type d'agents colorants lorsqu'une couleur particulière comme le bleu turquoise est souhaitée.

Les pigments bleu turquoise ne sont pas courants sur le marché et se dégradent ou s'oxydent lors de la cuisson de l'émail de telle manière qu'il n'est pas possible de conserver la couleur bleu turquoise souhaitée une fois la cuisson achevée.

De manière peu courante, la formulation in situ de pigment est utilisé pour la fabrication de pigment rouge dans une matrice de zircone-alumine cristallin. Il n'y aucun cas connu de formulation de pigment in situ dans une matrice d'émail et encore moins de pigment turquoise.

### RESUME DE L'INVENTION

La présente invention a pour objet de pallier aux désavantages précités en proposant un nouvel émail présentant une couleur bleu turquoise à la fin de la cuisson.

À cet effet, la présente invention se rapporte à une composition d'émail de couleur, constitué de fritte d'émail blanc à base de silice, d'alumine et de l'oxyde de cérium et les additifs suivants :
- du sulfate de cuivre anhydre ayant une teneur en masse comprise entre 7% et 15% ;
- du carbonate de potassium ayant une teneur en masse comprise entre 7% et 15% ;
- de l'oxyde de zinc ayant une teneur en masse comprise entre 5% et 15% ; et
- un oxyde de vanadium ayant une teneur en masse comprise entre 2% et 7%.

Conformément à d'autres variantes avantageuses de l'invention :
- la fritte d'émail blanc est composée de silice entre 60% et 80%, d'alumine entre 5% et 15%, et de l'oxyde de cérium entre 10% et 30% ;
- le ratio entre la fritte d'émail et les additifs est inférieur à 0,6.

L'invention concerne également un procédé de fabrication d'un objet avec un émail de couleur bleu turquoise, le procédé comprenant les étapes suivantes :
- réaliser un mélange aqueux comprenant de la fritte d'émail blanc, 7% et 15% en poids de sulfate de cuivre anhydre, 7% et 15% en poids de carbonate de potassium, 5% et 15% en poids d'oxyde de zinc, et 2% et 7% en poids d'oxyde de vanadium.
- déposer l'émail obtenu sur un objet ;
- placer l'objet avec l'émail dans un four et monter jusqu'à une température maximale comprise entre 700°C et 1000°C pour obtenir un support avec émail cuit de couleur bleu turquoise.

Conformément à d'autres variantes avantageuses de l'invention :
- le mélange aqueux est réalisé avec de l'eau déminéralisée ;
- la température maximale est maintenue pendant une durée d'au moins cinq minutes ;
- l'objet est un substrat en céramique.

L'invention concerne également un objet avec un émail de couleur bleu turquoise, la couleur bleu turquoise présentant les paramètres suivants dans l'espace chromatique CIELAB : la clarté L est comprise entre 69 et 76, l'index chromatique a* est compris entre -14 et -19, et l'index chromatique b* est compris entre -8 et -12.

D'autres caractéristiques et avantages de la présente invention apparaîtront dans la description suivante d'un mode de réalisation préféré, présenté à titre d'exemple non limitatif.

### DESCRIPTION DETAILLEE

La présente invention se rapporte à un émail de couleur, et plus particulièrement à un émail de couleur bleu turquoise une fois cuit.

À cet effet, l'émail de couleur selon l'invention comprend de la fritte d'émail blanc à base de silice, d'alumine et de l'oxyde de cérium, du sulfate de cuivre anhydre, du carbonate de potassium ayant une teneur en masse comprise entre 7% et 15, de l'oxyde de zinc ayant une teneur en masse comprise entre 5% et 15%, et d'oxyde de vanadium ayant une teneur en masse comprise entre 2% et 7%.

La teneur des additifs et des composants de la fritte d'émail blanc est exprimée en pourcentage massique.

La fritte d'émail blanc se compose de silice comprise entre 60% et 80%, d'alumine comprise entre 5% et 15% et de l'oxyde de cérium compris entre 10% et 30%. Le sulfate de cuivre anhydre présente une teneur comprise entre 7% et 15%, et est de préférence entre 8% et 12%. La teneur du carbonate de potassium est comprise entre 7% et 15%, et est de préférence entre 8% et 12%. La teneur de l'oxyde de zinc est comprise entre 5% et 15%, et est de préférence entre 8% et 10%. Enfin, de l'oxyde de vanadium avec une teneur comprise entre 2% et 7%, et est de préférence de 3% et 5%.

Chaque additif a une fonction spécifique dans la formulation, par exemple avec l'ajout de carbonate de potassium on ajuste le pH de la suspension qui nous permet de stabiliser la réaction chimique. De manière préférentielle, le carbonate de potassium et le sulfate de cuivre sont à l'équilibre. Un surplus de sulfate de cuivre par rapport au carbonate de potassium entraine un changement de couleur vers le vert, et un déficit de sulfate de cuivre par rapport au carbonate de potassium entraine un changement vers le noir.

Après cuisson, l'émail est de couleur bleu turquoise et a un espace colorimétrique CIELAB avec une composante L* comprise entre 69 et 76, une composante a* comprise entre -14 et -19, et une composante b* comprise entre -8 et -12. L'espace colorimétrique peut par exemple être L*a*b* : 72, - 16, -10.

L'invention concerne également un procédé de fabrication d'un objet avec un émail de couleur bleu turquoise, le procédé comprenant les étapes successives suivantes :
- réaliser un mélange aqueux comprenant de la fritte d'émail blanc à base de silice, d'alumine et d'oxyde de cérium, entre 7% et 15% en poids de sulfate de cuivre anhydre, entre 7% et 15% en poids de carbonate de potassium, entre 5% et 15% en poids d'oxyde de zinc et entre 2% et 7% d'oxyde de vanadium;
- déposer l'émail obtenu sur un objet ;
- placer l'objet avec l'émail dans un four et monter jusqu'à une température maximale comprise entre 700°C et 1000°C pour obtenir un support avec émail cuit de couleur bleu turquoise.

L'objet ainsi obtenu est refroidi et peut ensuite être usiné et/ou décoré si nécessaire pour obtenir l'objet final désiré.

De préférence, le mélange aqueux est réalisé au moyen d'eau déminéralisée.

Selon un mode de réalisation préférentiel de l'invention, l'objet est un substrat en céramique.

L'objet dans sa forme générale quasi finale est placé dans un four, l'objet présentant à sa surface ou dans des cavités de l'émail sous forme liquide, pâte ou poudre.

L'article est chauffé à une température maximale comprise entre 700°C et 1000°C, puis l'article est maintenu à cette température maximale pendant au moins quinze minutes. Si la température de cuisson est supérieure ou égale à 1000°C, des points noirs vont se former suite à l'apparition d'oxyde de cuivre et de dioxyde de cuivre.

Lors du mélange, le carbonate de potassium se décompose pour former de la potasse. Lors de la cuisson, le sulfate de cuivre se décompose et réagit avec la potasse pour former un composé de nature ionique comparable à celle de l'hydroxyde de cuivre, ce qui confère la couleur bleue au mélange.

On notera également que la présence de vanadium bleu permet d'ajuster l'intensité de la couleur bleu turquoise souhaitée

La couleur de l'objet obtenue après l'opération de cuisson est bleu turquoise, la couleur bleu turquoise présentant les paramètres suivants dans l'espace chromatique CIELAB : la clarté L est comprise entre 69 et 76, l'index chromatique a* est compris entre -14 et -19, et l'index chromatique b* est compris entre -8 et -12.

Une fois la cuisson effectuée, l'objet peut éventuellement être usiné pour obtenir une forme adaptée à son utilisation finale.

### Exemple d'un mode de réalisation :

Typiquement une formulation avec un ajout de +5% en carbonate de potassium, +10% en oxyde de zinc, +10% en sulfate de cuivre anhydre et +4% d'oxyde de vanadium par rapport à la fritte blanche donne un L de 66, un a* de -17 et un b* de -3, ce qui ne donne pas la bonne couleur verte turquoise plus que bleu turquoise.

## Revendications

1. Émail de couleur, constitué de fritte d'émail blanc à base de silice, d'alumine et d'oxyde de cérium et des additifs suivants :
- du sulfate de cuivre anhydre ayant une teneur en masse comprise entre 7% et 15% ;
- du carbonate de potassium ayant une teneur en masse comprise entre 7% et 15% ;
- de l'oxyde de zinc ayant une teneur en masse comprise entre 5% et 15% ;
- de l'oxyde de vanadium ayant une teneur en masse comprise entre 2% et 7%.

2. Émail de couleur selon la revendication 1, **caractérisé en ce que** la fritte d'émail blanc est composée de silice comprise entre 60% et 80%, d'alumine comprise entre 5% et 15% et d'oxyde de cérium compris entre 10% et 30%.

3. Émail de couleur selon la revendication 1 ou 2, **caractérisé en ce que** le ratio entre la fritte d'émail blanc et les additifs est inférieur à 0,6.

4. Procédé de fabrication d'un objet avec un émail de couleur bleu turquoise, **caractérisé en ce qu'**il comprend les étapes successives suivantes :
- réaliser un mélange aqueux comprenant de la fritte d'émail, 7% et 15% en poids de sulfate de cuivre anhydre, 7% et 15% en poids de carbonate de potassium, 5% et 15% en poids d'oxyde de zinc et entre 2% et 7% d'oxyde de vanadium;
- déposer l'émail obtenu sur un objet ;
- placer l'objet dans un four et monter jusqu'à une température maximale comprise entre 700°C et 1000°C pour obtenir un support avec émail cuit de couleur bleu turquoise.

5. Procédé selon la revendication 4, **caractérisé en ce que** le mélange aqueux est réalisé avec de l'eau déminéralisée.

6. Procédé selon la revendication 4 ou 5, **caractérisé en ce que** la température maximale est maintenue pendant une durée d'au moins 5 minutes.

7. Procédé selon l'une des revendications précédentes **caractérisé en ce que** l'objet est un substrat céramique.

8. Objet avec un émail de couleur bleu turquoise, **caractérisé en ce que** la couleur bleu turquoise présente les paramètres suivants dans l'espace chromatique **CIELAB** : la clarté L est comprise entre 69 et 76, l'index chromatique a* est compris entre -14 et -19, et l'index chromatique b* est compris entre -8 et -12.
